# EUROPEAN PATENT SPECIFICATION

(11) **EP 1 479 190 B1**
(45) Date of publication and mention of the grant of the patent: **30.04.2014**
(21) Application number: 03743089.9
(22) Date of filing: 29.01.2003
(51) Int. Cl.: H04L 12/14, H04L 29/06, G06F 1/00

(54) **A METHOD AND DISTRIBUTED RATING SYSTEM FOR DETERMINING RATING DATA IN A CHARGING SYSTEM**
VERFAHREN UND VERTEILTES EINSTUFUNGSSYSTEM ZUR BESTIMMUNG VON EINSTUFUNGSDATEN IN EINEM GEBÜHRENSYSTEM
PROCEDE ET SYSTEME DE TARIFICATION DISTRIBUEE PERMETTANT DE DETERMINER DES DONNEES DE TARIFICATION DANS UN SYSTEME DE FACTURATION

(30) Priority: 28.02.2002 SE 0200648
(43) Date of publication of application: 24.11.2004
(73) Proprietor: Telefonaktiebolaget L M Ericsson, 164 83 Stockholm (SE)
(72) Inventor: KARLSSON, Stefan, S-371 36 Karlskrona (SE)
(74) Representative: Egrelius, Fredrik
(86) International application number: PCT/SE2003/000148
(87) International publication number: WO 2003/073693

(56) References cited:
- WO-A1-01/99446
- WO-A1-97/26739
- US-A1- 2002 072 333
- US-B1- 6 195 364
- US-B1- 6 307 924
- PATENT ABSTRACTS OF JAPAN vol. 2003, no. 1 14 March 2003 & JP 2002 261987 A (HITACHI LTD) 13 September 2002

## Description

### Field of the Invention

The present invention relates to charging systems and more particularly to a method and distributed rating system for determining rating data for charging services in a communications network.

### Description of the Prior Art

Billing for usage of mobile telephone communications networks such as GSM, public switched telecommunications networks (PSTN), ISDN, ATM, Internet etc. and their associated services is achieved by means of a payment mechanism see for example US-A-6 307 924. Both post-paid and pre-paid systems are used. In prior art pre-paid systems it is common practice to load an account with money and then deduct the account balance due to subscriber usage.

Today's mobile telephone communications networks such as GSM, public switched telecommunications networks (PSTN), ISDN, ATM, Internet etc. provide many different more or less sophisticated tele and data communications services for users and providers, regional as well as world-wide. The demands for increased benefit of the network operator, the service provider, and the service subscriber have brought forth the concept of Intelligent Network (IN). An Intelligent Network is a telecommunications concept that meets the market demand, from network operators and service providers, for advanced services within the existing telephony network. IN is a network architecture connected to the basic network (for instance a fixed or mobile network), enabling faster, easier, and more flexible service implementation and service control. This is effected by transferring the service control from the switching centre to a separate functional IN unit. Thus, the service becomes independent of the basic network operation, and the basic network structure and software need not be changed when services are altered or added. Examples of such services are Premium Rate calls, Mobile Virtual Private Network, Prepaid charging and Personal Number. Different network providers offer different sets of services including both charged services and services free of charge.

When running several service providers, content providers, value added service providers, hereafter called providers, in one charging system, the system itself is operated and owned by the network operator, hereafter called operator. A provider using the system is operating with full insight of the operator, i.e. the providers core business with rating plan such as tariff setting, tariff switch and rating conditions are known to the operator, which might be the owner of one of the competing providers.

In some prior art charging or pre-pay systems there are limited support for providers operating in a common system and the system does not support any data integrity with respect to rating plans, rating data and rating schemes/algorithms. The provider is not allowed to access this data at all and its management is handled by the operator.

A problem is also that of system maintenance. An operator owning a centralized system would not readily allow one of its associated providers access to the system and its data thus risking to compromise both security and system stability for the complete system.

### Summary of the invention

Therefore, it is an object of the present invention to provide a method and rating system for determining rating data for services in a communications network that overcomes the problem and disadvantages set forth above in connection with the prior art.

This object is achieved by a method for determining rating data for services in a communications network, wherein data identifying a service requested by a subscriber is accessed by central rating means; a rating request, including the accessed data is sent to distributed rating means for distributed rating, based on rating data related to the accessed data. The rating data is received from the distributed rating means, and a rating value is determined for charging a subscriber based on the received rating data.

The object is further achieved by a distributed rating system for determining rating data in the a communications network. The distributed rating system is characterised by a central rating means including a computer apparatus adapted to access data identifying a service requested by a subscriber; send a rating request, including the accessed data, to distributed rating means for distributed rating depending on rating data related to said accessed data, receive rating data from said distributed rating means, and determine a rating value for charging a pre-paid account of said subscriber based on said received rating data.

A more specific object of the invention is to provide a computer program for working the method.

An advantage of the present invention is that an(network) operator can offer providers access to the system without compromising the integrity of their rating plan and rating data. The data are also hidden between providers. Moreover, the invention will also help hiding rating plans between different customers to the provider.

It should be emphasized that the term "comprises/ comprising" when used in this specification is taken to specify the presence of stated features, integers, steps or components but does not preclude the presence or addition of one or more other features, integers, steps, components or groups thereof.

### Brief Description of the Drawings

In order to explain the invention in more detail and the advantages and features of the invention, a preferred embodiment will be described in detail below, reference being made to the accompanying drawings, in which
FIG 1 is a schematic view of a part of a cellular mobile telephone network,
FIG 2 is a schematic view of an intelligent network (IN) implementation of the network in FIG 1 including a distributing rating system according to the invention,
FIG 3 illustrates one embodiment of the distributed rating system of FIG 2 in further detail,
FIG 4 is a signalling diagram illustrating an embodiment of the method of determining rating data according to the invention,
FIG 5 shows a part of an analysis tree of a central charging function in the system of FIG 2, and
FIG 6 illustrates an alternative embodiment of the distributed rating system of FIG 2 in further detail.

### Detailed Description of the Invention

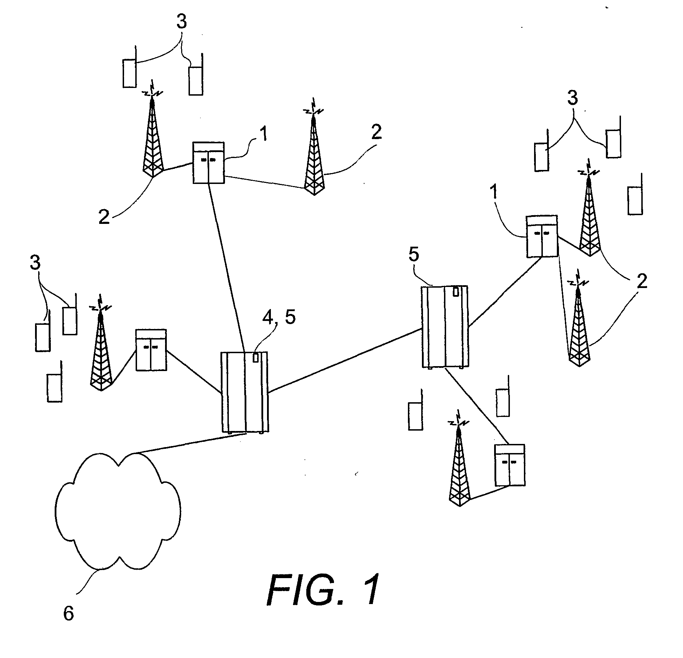

Referring to FIG 1, there is shown an example of a communications network such as a cellular mobile telephone network or PLMN (public land mobile network) including a service providing network, such as an intelligent network (IN) facilitating service delivery for subscribers connected to the network. In this embodiment, the network also provides a pre-pay mechanism and a method for determining rating data for pre-paid services for subscribers in the communications network. Said pre-pay mechanism provides data integrity for providers, content providers or value added service providers etc., hereafter called provider, with respect to rating data and plans in relation to a network operator, hereafter called operator, in the communications network. The pre-pay mechanism is only one example of a method for charging for services in a communications network, but this mechanism is not necessary for the invention. A post-pay mechanism or other method of charging is likewise possible within the scope of the invention.

Cellular telephone service, such as GSM/UMTS, involves the subdivision of a service area into a number of smaller cells. Each cell requires a base station controller (BSC) 1 and a base station (BTS) 2, as shown in FIG 1. The BSC 1 performs the tracking of mobile telephone users. A gateway mobile services switching centre (GMSC) 4 or only mobile services switching centre (MSC) 5 provides specific data about individual mobile phones 3 in the network and operates as an interface towards other networks such as other PLMNs, ISDN or the public switched network (PSTN) 6 in the communications system. The (G)MSC 4 and 5 comprises a data processing system, including a computer processor for processing data, and storage means connected to the computer processor for storing data on a storage medium.

Cellular systems are using radio access based on both analogue and digital transmission. Digital cellular systems provide the best quality with the least amount of bandwidth. Different kinds of principles such as TDMA or CDMA technologies are used for digital cellular systems, such as GSM.

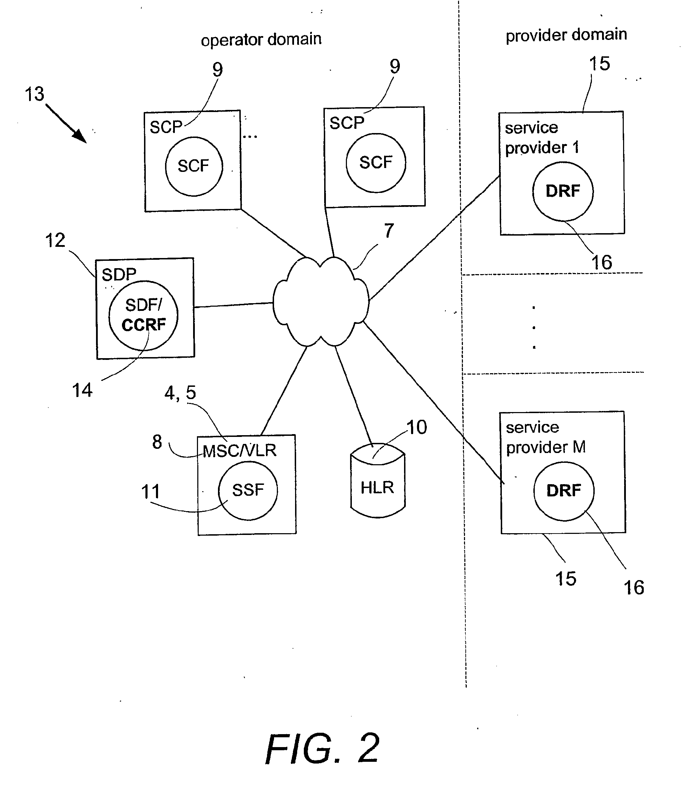

An example of an intelligent network (IN) implementation for the network in FIG 1 including a distributing rating system according to the invention with integrity for providers with respect to rating data, plans, algorithms or schemas in relation to an operator in the communications network with is shown in FIG 2. The intelligent network IN has a signalling network, which performs message switching between network elements. In this embodiment of the invention, a specific type of signalling protocol, signalling system 7 (SS7), is used as a carrier for the exchange of information messages and carries many types of information elements, which are useful for intelligent network services. However, SS7 is only an example and the signalling protocol can be based on another protocol such as the Internet Protocol (IP), Camel Application Part (CAP) for GSM/UMTS, IN Application Part (INAP) for fixed networks - where CAP and INAP are transported on SS7/C7/SIGTRAN. Additionally, the intelligent network includes a service switching point (SSP 8) having a gsm service switching function (gsmSSF), in this embodiment, located in the (G)MSC 4, 5. The SSP 8 detects events indicating a call requiring IN and after this triggering, it suspends call processing and starts a series of transactions with a service control point (SCP) 9) including a gsm service control function (gsmSCF) in this embodiment. In another embodiment of the invention used for GPRS the service switching point (SSP 8) includes a gprs service switching function (gprsSSF) located in the serving or gateway GPRS support node (SGSN/GGSN). The SCP 9 is a real-time database and service processing system that, based on a query from the SSP 8, performs subscriber- or application-specific service logic, controlling the call set-up and call flow. A home location register (HLR) 10 stores the identity and user data of all the subscribers belonging to the PLMN. Further, the HLR 10 provides the (G)MSC 4, 5 with the necessary subscriber data when a call is coming from a public switched network (PSTN) 6, an ISDN network, the Internet etc. A visitors location register (VLR) 11 contains relevant data of all mobiles currently located or roaming within a serving (G)MSC 4, 5. The VLR 11 has to support the (G)MSC 4, 5 during call establishment when a call is coming from a mobile telephone 1. A service data point (SDP) 12 is a database containing service data needed for the service, including for example tariff data, subscriber data, group data etc. in this embodiment. Rating and charging analysis is also handled in the SDP 12 or SCP 9.

Before a mobile telephone user can make a phone call or use other post or prepaid services provided by the network and service providers, content provider or value added service provider etc., hereafter called providers, he/she has to be registered as a "subscriber".

The distributed rating system of the invention comprises but is not limited to one operator 13, having a central charging and rating function CCRF 14, and one or several providers 15, having a distributed rating function DRF 16. The providers could be geographically separated from the operator. The operator and the provider(s) respectively control their own domain, which could be located in the same or different countries. Further, the operator and provider(s), respectively, own, stores and controls their own data. Hence data controlled by the operator is protected from access by the providers and vice versa.

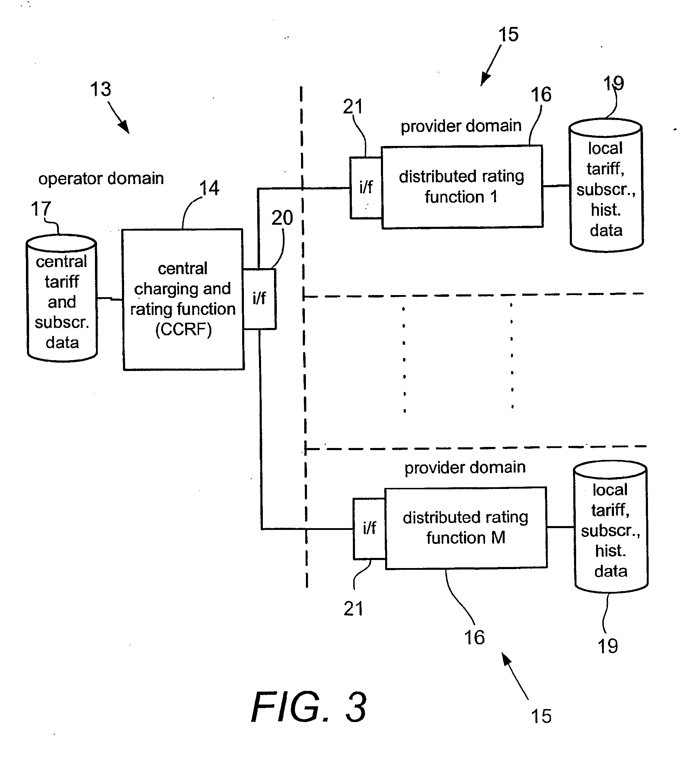

The main components constituting the distributed rating system according to the invention is shown in FIG 3.

The operator controls main rating schemes and central tariff data stored in storage 17. The operator also keeps account data for subscribers. The providers 15 own and control specific rating schemes and tariff data stored in a storage 19 for the subscribers and accounts to which they provide services.

The operator communicates with the providers via interfaces 20 and 21 using a connection protocol described later.

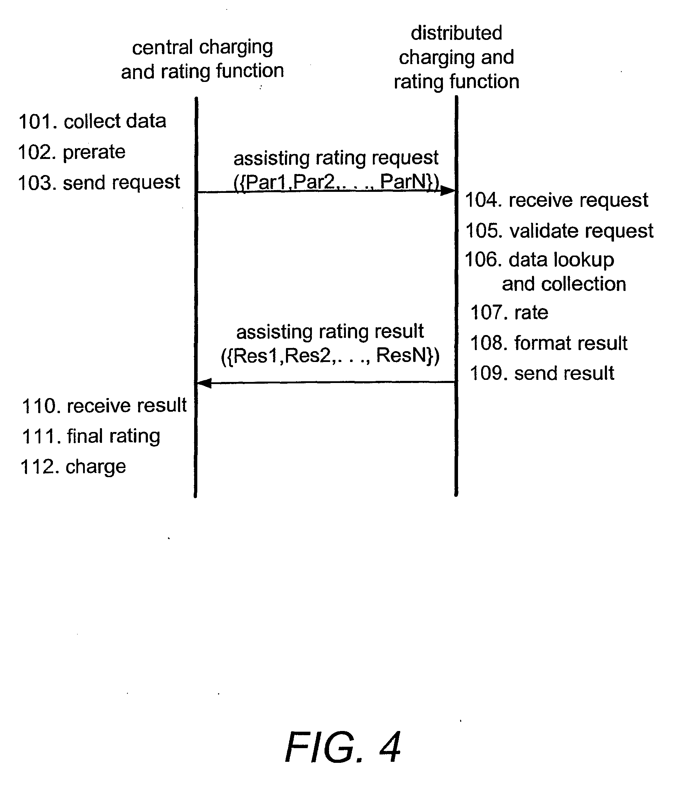

One embodiment of the method for determining rating data for services with data integrity for providers according to the invention in a communications network is described in connection with the signalling diagram of FIG 4.

In step 101 the central charging and rating function CCRF 14 collects or accesses charging input parameters or data such as: service data, subscriber related data, session data, call data, system data etc, received from an external service element of a service requested by a subscriber. One example of a requested service is a regular phone call from a pre-pay subscriber in a PLMN, said subscriber having an account registered for one or more services at one of the service providers 15 in FIG 3. The service element is for example an SSF via CAP or INAP, SCF via CAP or INAP, HLR via MAP, HSS (Home Subscriber Subsystem) web servers-/application servers via Diameter, SIP, open API via IP, i.e OSA/Parlay, XML webservers via SOAP or any other server with an application requiring charging support, such as an e-commerce site movie/music server for streaming, a news site, WAP server or an SMSC/MMS-C. The charging input parameters are an article, number of events, kind of event, service, local time, destination number, originating or terminating location, distance, QoS, number of time slots, or utilised capacity etc.

In this embodiment the CCRF 14 performs pre-rating of the requested service in step 102, i.e determines pre-rating data if this is applicable for the current service. Next, the CCRF 14 signals to the DRF 16 of the provider 15. All rating related data needed as a complement to the data stored at the provider 15, is included in the signal request: Assisting Rating Request ({Par1,Par2,...,ParN}) or ARR. The ARR operation signals enough information from the centralized charging and rating function CCN 14 to make it possible for the remote rating function to perform proper rating on a requested service or event. The transmitted parameters Par1, Par2, ..., ParN includes information for the rating function used for rating such as subscriber identification, event status, event information etc.

The Distributed Rating Function DRF 16 at the provider 15 receives the request for rating data from the CCRF 14 via the interface 20 through the network and the interface 21 to the DRF 16 in step 104. The received parameters are accessed for authenticating and authorizing the requesting operator and parameter data in step 105. One or more data lookup-operations for local tariff data is performed in the storage 19 in step 106. The looked up data, which is protected against access from the CCRF 14, is processed according to the algorithm applicable for the current service in step 107. In the next step 108, the DRF 15 formats the determined rating data according to the connection protocol used in the communication between the operator and provider. Thus, the resulting rating data of the calculation are included in an answer message created to be returned to the CCRF 14 of the operator 13. The answer data format could either be pre-synchronised with the requesting CCRF or locally decided and indicated in the answer. The answer message or assisting rating result ARRE including one or more parameters ({Res1, Res2,..., ResN}) with rating data is sent to the requesting CCRF 14 in step 109.

The result of the process could be stored together with the charging input to be used for statistical purposes and for future rating based on historical data either in the provider 19 or the CCRF 14. The data can be output as call detail records and event detail records. This data could also be used for settlement purposes between the operator and the provider.

This returned information could for instance be an absolute charge (e.g. cost per time unit or data volume, per event, per content), a set of tariff data (including cost, duration/volume, time/volume interval etc.) or a specific scaling factor (percent) that scales the operators determined charge.

The rating data are received from the DRF in step 110. A rating value is determined in step 111 for charging a pre-paid account of the subscriber in step 112, which has requested the service, based on the received rating data.

The method steps 101 to 112 could of course be repeated for a number of charging sessions.

Depending on the implementation or agreements between the operator and provider(s), the CCN can let the provider decide the complete final rate (and charge) by itself by not using the pre-rating and/or final rating described later. It could also add an extra charge or only have the distributed rating function to scale the outcome of the central rating result.

As mentioned above, the operator domain comprises the central charging and rating function CCN 14, the central tariff data 17 and the end-users accounts 18. Additionally, it provides means for call control and, might contain authentication and authorisation functions of the end-user.

The central charging and rating function CCN 14 can invoke the distributed charging and rating function 16 at different stages, for example the data collection, rating pre-analysis, rating, promotion analysis, final rating and follow-up data output.from the data collection, rating pre-analysis, rating, promotion analysis, final rating and follow-up data output.

In the different steps of the method for determining rating data, the charging input parameters received from the external service element together with service and subscriber/account data indicate that the assisting rating request to the distributed rating means in the provider 15 should be invoked and which parameters to be used. For the different rating and promotion analysis steps, explicit statements are possible to make in the analysis tables and trees of the operator.

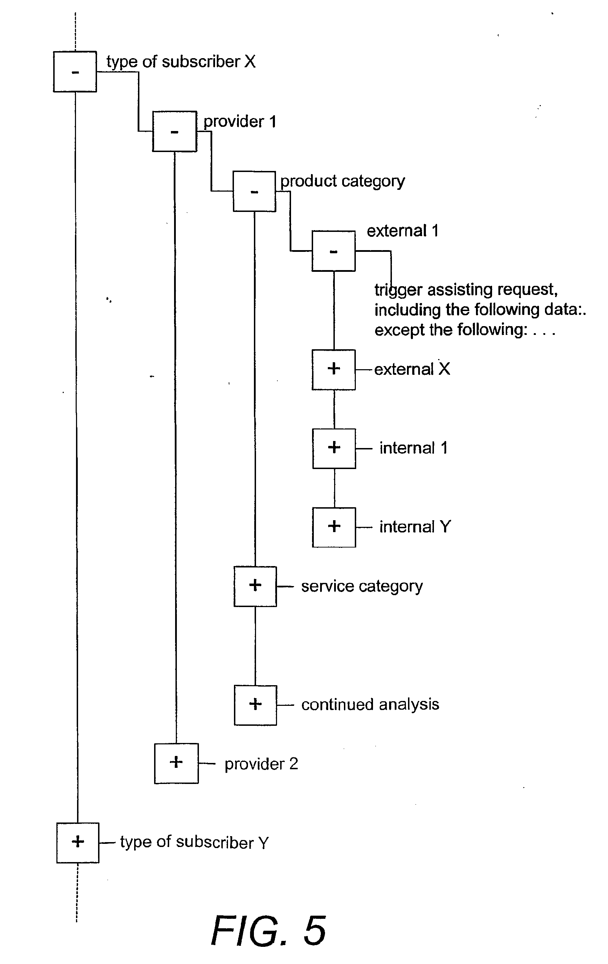

A part of an analysis structure explicitly invoking the assisting request for external rating or price information is shown in FIG 5. The data to be used in the request could be stored in the structure or a reference could be given to the data to be included, i.e dynamic data associated with the call/session/event, for example location and/or local time, or subscription data such as service class and/or kind of subscription. The answer to the request might · be used for further processing (Continued Analysis node), if not suppressed.

The differentiation in stages implies that the call handling, rating and charging functions could request for distributed rating in different handling stages. The answer to the request will be received before continued processing (the analysis will be halted) but the collected answer data could be used in any stage of processing i.e at data collection, rating pre-analysis, rating, promotion analysis, final rating, or follow-up data output. The data included in the answer could either be pre-defined in the requesting entity (operator or provider), defined in the request or could be described in the answer defined by the answering entity (operator or provider).

The content in the answer is used based on rules specified in the operator domain and on the answer content itself. All parameters are not used in every cases, some of them are only output in data records, some of them are used in pre-rating/rating/promotion analysis etc. The result of the process could be stored together with the charging input for statistical purposes and for future rating based on historical data. This stored data could also be output for settlement purposes between the operator and the provider.

As described above, the providers domain comprises the distributed charging and rating function DRF 16, local tariff data 19, and data associated with the subscriber such as historical data about previous purchases, local subscriber data for differentiating the costs. The DRF 16 is set-up to receive requests from the CCN 14. The received parameters are analysed in the DRF. Based on the parameters and locally stored tariff data and/or plans rating data are determined and an answer message is created. The answer data format could either be pre-synchronised with the requesting operator or locally decided and indicated in the answer.

The input data (external and internal) from the CCN 16 could be handled according to different schemes or algorithms by the DRF 15. Fixed mapping (product code/pieces etc. to cost, tax etc.); rating trees/analysis; location; weather conditions and other situation depending data; database look-up; promotion analysis using provided data or historical data; operator id; or any combination are a,few examples applicable.

The output from the algorithms could for instance be: cost (absolute value, cost per used unit etc.), fee, rate, scaling factors/parts of the cost, tax %, promotion (factor, volume, absolute etc.), previously used units, allowed units or combinations thereof.

A connecting protocol is used in the communication between the operator and providers via their respective interfaces 20,21. The main use of this connecting protocol is to carry a request and its data from the CCN 14 to the DRF 16, and carry the answer and its data - that might affect the processing in CCN - from the DRF 16 to the CCN 14.

This connecting protocol could be based on protocols such as X.25, IP, SS7, ATM, Frame Relay, SDH or be implemented as a completely proprietary solution. Information transfer protocols could be
- http (according to IETF),
- Inter Processor Communication protocols (such as the Ericsson Inter Processor Communication protocol),
- IIOP (Internet Inter-ORB Protocol e.g. as used in the RemoteMethod Invocation in the Java platform or Corba as defined by the Object Management Group),
- CAP (Camel Application Part version 1,2,3 and 4 according to 3GPP),
- INAP (Intelligent Network Application Part proprietary and according to ETSI CS1, CS2, CS3 etc.),
- MAP (Mobile Application Part according to 3GPP),
- IS41/IS95 (according to ANSI),
- Diameter (according to IETF),
- SIP (Session Initiating Protocol according to IETF),
- LDAP (Lightweight Directory Access Protocol according to IETF),
- DNS (Domain Name Server according to IETF),
- etc.

The method of the present invention is preferably implemented in computer software executable preferably by a distributed data processing system forming part of the overall communication system. More specifically, the operator and the providers form separate data processing system or are subsystems of the overall communication system for communication with other devices, components or data processing system/s in the communication system of the network. In one embodiment of the data processing system according to the invention it comprises a separate computer processors for processing data in the operator and the respective provider domains, and at least one separate storage connected to each computer processor for storing data on a storage medium.

In this embodiment of the invention, the computer processor of the operator in the network is configured to work the steps of the method performed in the operator domain. The computer processor of the provider in the network is configured to work the steps of the method performed in the provider domain.

Hence, it should be apparent that the present invention provides an improved method and system for use in an electronic communication network, comprising a rating and charging mechanism that provides data integrity for providers with respect to rating data and plans in relation to an operator in the communications network, that fully satisfies the aims and advantages set forth above. Although the invention has been described in conjunction with specific embodiments thereof this invention is susceptible of embodiments indifferent forms, with the understanding that the present disclosure is to be considered as an exemplification of the principles of the invention and is not intended to limit the invention to the specific embodiment illustrated.

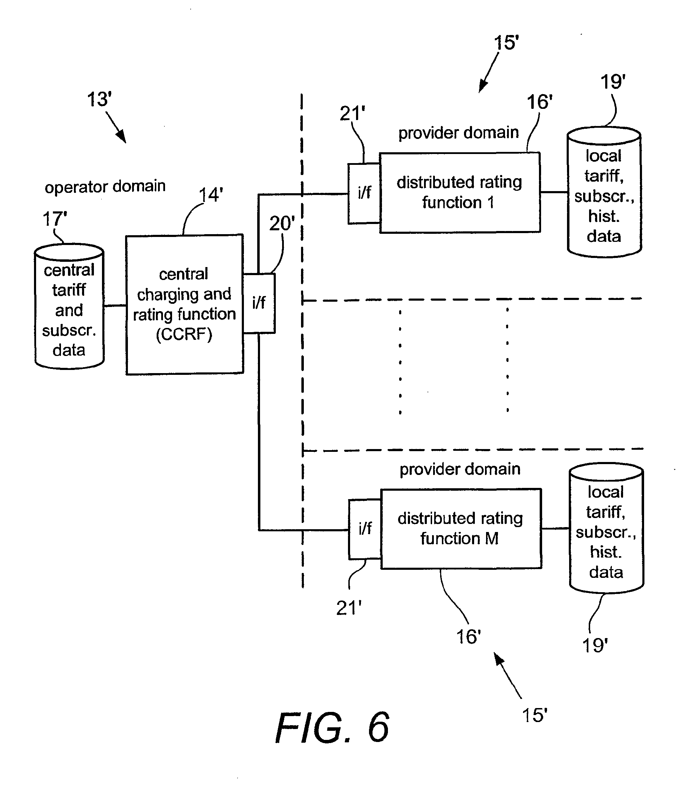

An alternative embodiment of the invention distributed rating system according to the invention is shown in FIG 6. This embodiment of the distributed rating system according to the invention comprises but is not limited to one operator 13', having a central charging and rating function CCN 14', and one or several merchants 15', having a distributed rating function DRF 16'. The merchants could be geographically separated from the operator. The operator and the merchant(s) respectively control their own domain, which could be located in the same or different countries. Further, the operator and merchant(s), respectively, own, stores and controls their own data. Hence data controlled by the merchant is protected from access by the operators and vice versa. The operator 13' controls central tariff data and service fee lists for services such as electronic commerce/payment services stored in storage 17'. The operator also keeps account data 18' for subscribers. The merchants 15' own and control specific local product data and price-lists stored in a storage 19.

The operator communicates with the merchants via interfaces 20' and 21' using a connection protocol as described in connection with the first embodiment.

In addition, the invention also extends to computer programs, particularly computer programs on or in a carrier, adapted for putting the invention into practice. The program may be in the form of source code, object code a code suitable for use in the implementation of the method according to the invention. The carrier can be any entity or device capable of carrying the program. For example the carrier may be a record medium, computer memory, read-only memory or an electrical carrier signal.

Although the method is described in conjunction with a mobile telephone call in an intelligent/CAMEL network the method is applicable on any communication session, both terminating and originating, and other communication services in other kind of networks. For example, the method and system according to the invention are applicable in other mobile telephone networks, public switched telecommunications networks (PSTN), ISDN, ATM, Internet etc., which provide many different more or less sophisticated tele and data communications services for users and providers.

For example, the distributed rating can be performed in more than two levels. In an alternative embodiment an e-merchant, providing articles on the Internet, involves a service provider for rating. The merchant has local or distributed rating data for determining rating data requested by the provider. The provider determines rating data based on rating data received from the merchant. Rating data determined by the provider is then sent to the operator for final rating as described above. Each provider may be connected to several e-merchants or other providers

## Claims

1. A method for determining rating data for services in a communications network,
**characterised by** the steps of:
accessing data associated with a service or a subscriber (101)
sending a rating request, including said accessed data, to a distributed rating means (16,19,21) for distributed rating based on distributed rating data related to said service or subscriber (103-109),
receiving resulting rating data from said distributed rating means (15,16,21) (110), and
determining a rating value for charging said subscriber based on said received rating data (112).

2. A method according to claim 1, **characterised in that** said distributed rating means (16,19,21) is operated by a service provider (15), content provider, or value added service provider.

3. A method according to any of the preceding claims, **characterised in that** said rating request is sent from central rating means (14,17,20) operated by a network operator (13).

4. A method according to any of the preceding claims, **characterised by**, before the step of sending said rating request, the further step of determining pre-rating data (102).

5. A method according to any of the preceding claims, **characterised by**, before the step of charging said account, the further step of determining final-rating data (111).

6. A method according to any of the preceding claims, **characterised in that** said rating value is determined based on said pre-rating data, distributed rating data from said distributed rating means (15,16,19), and final-rating data.

7. A method according to any of the preceding claims,
**characterised by** the steps of:
receiving data associated with the service or subscriber (101) from central rating means (104),
accessing and determining rating data for said service or subscriber based on the distributed rating data related to said service or subscriber and on said received data for transmission to said central rating means (105-108).

8. A method according to claim 7, **characterised in that** said distributed rating data is accessed and determined by the distributed rating means (16,19,21).

9. A computer program comprising program instructions for causing a computer to perform each of the steps of the method of any of the claims 1-8.

10. A carrier **characterised by** a computer program as claimed in claim 9 stored on it.

11. A carrier according to claim 10, **characterised in that** said carrier is a record medium, computer memory, read-only memory or an electrical carrier signal.

12. A distributed rating system for determining rating data for services in a communications network,
**characterised by** central rating means (14,17,20) including a computer apparatus adapted to
access service data associated with a service or subscriber,
send a rating request, including said accessed data, to a distributed rating means (16,19,21) for distributed rating based on distributed rating data (19) related to said service or subscriber,
receive resulting rating data from said distributed rating means (16,19,21), and
determine a rating value for said subscriber based on said received rating data.

13. A distributed rating system as in claim 12, wherein said system is a mobile communications system.

14. A distributed rating system as in claim 12, wherein said.system is an IN/CAMEL system.

15. A distributed rating system as in any of the claims 12-14, wherein said service is a prepaid service.

16. A distributed rating system as in any of the claims 12-15, wherein said service is an electronic commerce/payment service.

17. A distributed rating system as in any of the claims 12-16, wherein said resulting rating data is cost per time unit or data volume, per event, per content, a set of tariff data including cost, duration/volume, time/volume interval, or a specific scaling factor.

18. A distributed rating system according to any of the claims 12-17,
**characterised in that** the distributed rating means (16,19,21) including a computer apparatus adapted to
receive data associated with a service or subscriber from the central rating means (14,17,20),
access and determining rating data for said service or subscriber based on the distributed rating data related to said service or subscriber and on said received service data for transmission to said central rating means.

## Patentansprüche

1. Verfahren zur Bestimmung von Einstufungsdaten für Dienste in einem Kommunikationsnetz,
**gekennzeichnet durch** die folgenden Schritte:
Abrufen von Daten, die mit einem Dienst oder einem Teilnehmer assoziiert sind (101),
Senden einer Einstufungsanforderung, welche die abgerufenen Daten umfasst, an ein verteiltes Einstufungsmittel (16, 19, 21) zur verteilten Einstufung auf der Basis von verteilten Einstufungsdaten in Bezug auf den Dienst oder Teilnehmer (103 - 109),
Empfangen von resultierenden Einstufungsdaten vom verteilten Einstufungsmittel (15, 16, 21) (110), und
Bestimmen eines Einstufungswertes zur Vergebührung des Teilnehmers basierend auf den empfangenen Einstufungsdaten (112).

2. Verfahren nach Anspruch 1, **dadurch gekennzeichnet, dass** das verteilte Einstufungsmittel (16, 19, 21) durch eine Diensteanbieter (15), einem Inhalteanbieter oder einem Mehrwertdiensteanbieter betrieben wird.

3. Verfahren nach einem der vorhergehenden Ansprüche, **dadurch gekennzeichnet, dass** die Einstufungsanforderung von zentralen Einstufungsmitteln (14, 17, 20) gesendet wird, die durch einen Netzbetreiber (13) betrieben werden.

4. Verfahren nach einem der vorhergehenden Ansprüche, **gekennzeichnet durch** den weiteren Schritt des Bestimmens von Voreinstufungsdaten (102) vor dem Schritt des Sendens der Einstufungsanforderung.

5. Verfahren nach einem der vorhergehenden Ansprüche, **gekennzeichnet durch** den weiteren Schritt des Bestimmens von Endeinstufungsdaten (111) vor dem Schritt des Belastens des Kontos.

6. Verfahren nach einem der vorhergehenden Ansprüche, **dadurch gekennzeichnet, dass** der Einstufungswert basierend auf den Voreinstufungsdaten, den verteilten Einstufungsdaten vom verteilten Einstufungsmittel (15, 16, 19) und den Endeinstufungsdaten bestimmt wird.

7. Verfahren nach einem der vorhergehenden Ansprüche,
**gekennzeichnet durch** die folgenden Schritte:
Empfangen von Daten, die mit dem Dienst oder Teilnehmer assoziiert sind (101), von zentralen Einstufungsmitteln (104),
Abrufen und Bestimmen von Einstufungsdaten für den Dienst oder Teilnehmer basierend auf den verteilten Einstufungsdaten in Bezug auf den Dienst oder Teilnehmer und auf den empfangenen Daten zur Übertragung an die zentralen Einstufungsmittel (105 - 108).

8. Verfahren nach Anspruch 7, **dadurch gekennzeichnet, dass** die verteilten Einstufungsdaten durch das verteilte Einstufungsmittel (16, 19, 21) abgerufen und bestimmt werden.

9. Computerprogramm, umfassend Programmanweisungen, um einen Computer zu veranlassen, jeden der Schritte des Verfahrens nach einem der Ansprüche 1 bis 8 auszuführen.

10. Träger, **gekennzeichnet durch** ein Computerprogramm nach Anspruch 9, das darauf gespeichert ist.

11. Träger nach Anspruch 10, **dadurch gekennzeichnet, dass** der Träger ein Aufzeichnungsmedium, ein Computerspeicher, ein Festwertspeicher oder ein elektrisches Trägersignal ist.

12. Verteiltes Einstufungssystem zum Bestimmen von Einstufungsdaten für Dienste in einem Kommunikationsnetz,
**gekennzeichnet durch** zentrale Einstufungsmittel (14, 17, 20), die eine Computervorrichtung umfassen, die ausgelegt ist zum:
Abrufen von Dienstdaten, die mit einem Dienst oder Teilnehmer assoziiert sind,
Senden einer Einstufungsanforderung, welche die abgerufenen Daten umfasst, an ein verteiltes Einstufungsmittel (16, 19, 21) zur verteilten Einstufung auf der Basis der verteilten Einstufungsdaten (19) in Bezug auf den Dienst oder Teilnehmer,
Empfangen von resultierenden Einstufungsdaten vom verteilten Einstufungsmittel (16, 19, 21), und
Bestimmen eines Einstufungswertes für den Teilnehmer basierend auf den empfangenen Einstufungsdaten.

13. Verteiltes Einstufungssystem nach Anspruch 12, wobei das System ein Mobilkommunikationssystem ist.

14. Verteiltes Einstufungssystem nach Anspruch 12, wobei das System ein IN/CAMEL-System ist.

15. Verteiltes Einstufungssystem nach einem der Ansprüche 12 bis 14, wobei der Dienst ein Prepaid-Dienst ist.

16. Verteiltes Einstufungssystem nach einem der Ansprüche 12 bis 15, wobei der Dienst ein E-Commerce-/Zahlungsdienst ist.

17. Verteiltes Einstufungssystem nach einem der Ansprüche 12 bis 16, wobei es sich bei den resultierenden Einstufungsdaten um Kosten pro Zeiteinheit oder Datenvolumen, pro Ereignis, pro Inhalt, einen Satz von Tarifdaten, die Kosten, Dauer/Volumen, Zeit-/Volumenintervall umfassen, oder einen spezifischen Skalierungsfaktor handelt.

18. Verteiltes Einstufungssystem nach einem der Ansprüche 12 bis 17,
**dadurch gekennzeichnet, dass** das verteilte Einstufungsmittel (16, 19, 21) eine Computervorrichtung umfasst, die ausgelegt ist zum:
Empfangen von Daten, die mit einem Dienst oder Teilnehmer assoziiert sind, von den zentralen Einstufungsmitteln (14, 17, 20),
Abrufen und Bestimmen von Einstufungsdaten für den Dienst oder Teilnehmer basierend auf den verteilten Einstufungsdaten in Bezug auf den Dienst oder Teilnehmer und auf den empfangenen Dienstdaten zur Übertragung an die zentralen Einstufungsmittel.

## Revendications

1. Procédé de détermination de données de tarification pour des services dans un réseau de communication, **caractérisé par** les étapes consistant à :
accéder aux données associées à un service ou un abonné (101),
envoyer une demande de tarification, incluant lesdites données accédées, à un moyen de tarification distribué (16, 19, 21) pour une tarification distribuée sur la base des données de tarification distribuées relatives auxdits service ou abonné (103-109),
recevoir les données de tarification de résultat provenant dudit moyen de tarification distribué (15, 16, 21) (110), et
déterminer une valeur de tarification pour facturer ledit abonné sur la base desdites données de tarification reçues (112).

2. Procédé selon la revendication 1, **caractérisé en ce que** ledit moyen de tarification distribué (16, 19, 21) est exploité par un fournisseur de services (15), fournisseur de contenus ou fournisseur de services à valeur ajoutée.

3. Procédé selon une quelconque des revendications précédentes, **caractérisé en ce que** ladite demande de tarification est envoyée depuis le moyen de tarification central (14, 17, 20) exploité par un opérateur de réseau (13).

4. Procédé selon une quelconque des revendications précédentes, **caractérisé par**, avant l'étape d'envi de ladite demande de tarification, l'étape supplémentaire de détermination des données de pré-tarification (102).

5. Procédé selon une quelconque des revendications précédentes, **caractérisé par**, avant l'étape de facturation dudit compte, l'étape supplémentaire de détermination de données de tarification finale (111).

6. Procédé selon une quelconque des revendications précédentes, **caractérisé en ce que** ladite valeur de tarification est déterminée sur la base desdites données de pré-tarification, données de tarification distribuées provenant dudit moyen de tarification distribué (15, 16, 19) et données de tarification finale.

7. Procédé selon une quelconque des revendications précédentes, **caractérisé par** les étapes consistant à :
recevoir des données associées au service ou à l'abonné (101) provenant du moyen de tarification central (104),
accéder aux et déterminer les données de tarification pour ledit service ou abonné sur la base des données de tarification distribuées relatives audit service ou abonné ou des données reçues à des fins de transmission vers ledit moyen de tarification central (105-108).

8. Procédé selon la revendication 7, **caractérisé en ce que** lesdites données de tarification distribuées sont accédées et déterminées par le moyen de tarification distribué (16, 19, 21).

9. Programme informatique comprenant des instructions de programme pour amener un ordinateur à effectuer chacune des étapes du procédé selon une quelconque des revendications 1-8

10. Support **caractérisé par** un programme informatique selon la revendication 9 mémorisé sur celui-ci.

11. Support selon la revendication 10, **caractérisé en ce que** ledit support est un support d'enregistrement, une mémoire d'ordinaire, une mémoire en lecture seule ou un signal de porteuse radioélectrique.

12. Système de tarification distribuée pour déterminer des données de tarification pour des services dans un réseau de communication,
**caractérisé par** un moyen de tarification central (14, 17, 20) incluant un dispositif informatique adapté pour
accéder aux données associées à un service ou un abonné,
envoyer une demande de tarification, incluant lesdites données accédées, à un moyen de tarification distribué (16, 19, 21) pour une tarification distribuée sur la base des données de tarification distribuées (19) relatives auxdits service ou abonné,
recevoir les données de tarification de résultat provenant dudit moyen de tarification distribué (16, 19, 21), et
déterminer une valeur de tarification pour facturer ledit abonné sur la base desdites données de tarification reçues.

13. Système de tarification distribué selon la revendication 12, dans lequel ledit système est un système de communication mobile.

14. Système de tarification distribué selon la revendication 12, dans lequel ledit système est un système IN/CAMEL.

15. Système de tarification distribué selon une quelconque des revendications 12-14, dans lequel ledit service est un service prépayé.

16. Système de tarification distribué selon une quelconque des revendications 12-15, dans lequel ledit service est un service de commerce électronique/paiement.

17. Système de tarification distribué selon une quelconque des revendications 12-16, dans lequel lesdites données de tarification de résultat sont des unités de coût par temps ou volumes de données, par évènement, par contenu, un ensemble de données de tarif incluant le coût, durée/volume, intervalle de temps/volume ou un facteur de mise à l'échelle spécifique.

18. Système de tarification distribué selon une quelconque des revendications 12-17,
**caractérisé en ce que** le moyen de tarification distribué (16, 19, 21) inclut un dispositif informatique adapté pour :
recevoir des données associées à un service ou un abonné provenant du moyen de tarification central (14, 17, 20),
accéder et déterminer les données de tarification pour ledit service ou abonné sur la base des données de tarification distribuées relatives audit service ou abonné et desdites données de service reçues à des fins de transmission vers ledit moyen de tarification central.
